(19) Europäisches Patentamt
European Patent Office
Office européen des brevets

(11) EP 4 703 947 A1

(12) EUROPEAN PATENT APPLICATION

(43) Date of publication:
04.03.2026 Bulletin 2026/10

(21) Application number: 24197605.9

(22) Date of filing: 30.08.2024

(51) International Patent Classification (IPC):
G06F 30/00 (2020.01)      G06F 16/901 (2019.01)
G06F 40/30 (2020.01)      G06N 5/022 (2023.01)

(52) Cooperative Patent Classification (CPC):
G06F 30/00; G06F 16/9024; G06F 40/30;
G06N 5/022

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Aktiengesellschaft
80333 München (DE)

(72) Inventors:
• N, Madhusudanan
  560036 Bengaluru, Karnataka (IN)
• SHYAM SUNDER, Swathi
  560060 Bengaluru, Karnataka (IN)
• VAIDYA, Nishtha
  560100 Bangalore, Karnataka (IN)

(74) Representative: HKW Intellectual Property PartG
mbB
Theresienhöhe 12
80339 München (DE)

(54) **SYSTEM AND METHOD FOR GENERATING AND MODIFYING ENGINEERING SCHEMATICS**

(57)     Disclosed is a method (100) for generating and modifying engineering schematics. The method comprises receiving a natural language input via a user interface, the input containing a user intent to perform operations on an engineering schematic. The method generates a structured representation of the input using a language model, identifying components, actions, and attributes. Knowledge graph queries are generated based on this representation, compatible with a standardized ontology. These queries are executed to retrieve component, connection, and attribute data from the knowledge graph. A system representation of the schematic is generated using the retrieved data and specified actions. The method then renders a visual representation of the engineering schematic based on this system representation and outputs it via the user interface. This approach allows for intuitive schematic modification using natural language processing and knowledge graph technologies.

FIG 3

# EP 4 703 947 A1

**Description**

The present invention relates to the field of computer-aided design and engineering. More specifically, the invention pertains to systems and methods for generating and modifying engineering schematics using natural language processing and knowledge graph technologies.

Engineering schematics, such as Piping and Instrumentation Diagrams (P&IDs), Process Flow Diagrams (PFDs), Heating, Ventilation and Air Conditioning (HVAC) layouts, and electrical wiring diagrams, are essential tools in various industrial sectors. These schematics serve as visual representations of complex systems, enabling engineers and technicians to design, analyse, and maintain industrial processes and facilities. Though the conceptual and embodiment design processes of such systems involve considerable thought and is a creative process, the actual process of drawing these schematics is a repetitive, manual process, where the bulk of the effort is in realizing the idea, not the ideation itself. Though it is a well-practiced trade, it still may need iterations to ensure clarity, correctness and conformance to standards. Hence the task of translating a system design to a schematic is manually intensive and iterative.

Due to the heavy reliance on the familiarity and fluency of the designer with the authoring tools, translating their ideas to detailed designs is not currently as fluid/interactive/seamless as it could be. They must spend the earmarked effort in drawing it out correctly before iterating on improving it. Also, quite similar to the problem in the domain of computer programming, the maintenance of existing schematics and change management, is as challenging, if not more challenging than the process of authoring from scratch. This is because the complete understanding of a working system's schematic and its correlation to the physical system are pre-requisites to the maintenance of an existing schematic.

Some computer-aided design tools have been developed to assist in the creation and modification of engineering schematics. These tools typically provide libraries of standard components, drag-and-drop interfaces, and automated layout algorithms. While these solutions have improved efficiency to some extent, they still require users to have in-depth knowledge of the software interface and the ability to manually manipulate individual components. In general, such conventional approaches have these following limitations. They often have steep learning curves, requiring extensive training for users to become proficient. The process of translating high-level design concepts into detailed schematics remains largely manual, limiting the speed at which engineers can iterate on their designs. These tools generally lack the ability to understand and interpret natural language instructions, forcing users to interact with the system through rigid, predefined commands and menu structures.

Therefore, there is a need for a solution that can reduce/remove the gap in ideation to detailed drawing of schematics by automating the bulk of the drawing process; enable intelligent understanding of the schematics' underlying knowledge to help analytical systems to evaluate them; and provide a natural means of interaction for the human expert to interact with a schematic representation of the system under work.

The present invention aims to provide a system and a method for generating and modifying engineering schematics which can bridge the gap between natural human expression of design intent and the technical requirements of schematic creation. The system and the method of present invention provide solutions for interpreting natural language instructions, understanding underlying engineering principles, and automatically generating or modifying schematics accordingly, while ensuring compliance with industry standards and best practices.

The object of the present invention is achieved by a method for generating and modifying engineering schematics. The method employs a processing unit to execute a series of steps for such purpose. The method comprises receiving, via a user interface, a natural language input related to an engineering schematic. Herein, the natural language input comprises a user intent to perform one or more operations on the engineering schematic. The method further comprises generating a structured representation of the natural language input by processing the natural language input using a language model. The structured representation comprises one or more of identified engineering components, actions to be performed on the identified engineering components, and attributes associated with the identified engineering components. The method further comprises generating one or more knowledge graph queries, for a knowledge graph, based on the structured representation. Herein, the knowledge graph queries are compatible with the knowledge graph based on a standardized ontology for a domain of the engineering schematic. The method further comprises executing the one or more knowledge graph queries to retrieve, from the knowledge graph, one or more of component data corresponding to the identified engineering components, connection data specifying allowable connections between the identified engineering components, and attribute data specifying allowable attributes for the identified engineering components and the allowable connections. The method further comprises generating a system representation, corresponding to the engineering schematic, using the knowledge graph based on the retrieved component data, connection data, and attribute data, and the specified actions in the structured representation. The method further comprises rendering a visual representation of the engineering schematic based on the generated system representation. The method further comprises outputting the visual representation of the engineering schematic via the user interface.

In one or more embodiments, the language model is a large language model trained on domain-specific engineering terminology and syntax.

In one or more embodiments, processing the natural language input using the language model further comprises interpreting explicit intent stated in the natural language input, and deriving implicit intent based on at least one of context from previous user interactions, domain-specific rules, and industry best practices.

In one or more embodiments, generating the one or more knowledge graph queries comprises analysing the structured representation to identify constituent components. The method further comprises preparing prompts based on a catalogue of examples for different types of intents. The method, then, comprises generating the one or more knowledge graph queries using the prepared prompts.

In one or more embodiments, the knowledge graph comprises nodes representing engineering components and edges representing connections between the engineering components. Herein, generating the system representation using the knowledge graph comprises at least one of adding nodes and edges, modifying existing nodes or edges, and removing nodes or edges, within the knowledge graph.

In one or more embodiments, generating the system representation using the knowledge graph comprises comparing specifications in the structured representation with a database of standardized components. The method further comprises identifying standardized components that correspond to the specifications based on the comparison. The method, then, comprises generating the system representation using the identified standardized components.

In one or more embodiments, rendering the visual representation of the engineering schematic comprises determining a spatial arrangement of the engineering components using a layout algorithm. The method, then, comprises rendering the engineering components and their connections based on the determined spatial arrangement.

In one or more embodiments, the method further comprises receiving, via the user interface, a user input to modify the visual representation of the engineering schematic. The method further comprises updating the system representation based on the user input. The method further comprises re-rendering the visual representation of the engineering schematic based on the updated system representation.

The object of the present invention is also achieved by a system comprising one or more processing units and a memory unit communicatively coupled to the one or more processing units. Herein, the memory unit comprises an engineering schematic design module stored in the form of machine-readable instructions executable by the one or more processing units, wherein the engineering schematic design module is configured to perform aforementioned method steps for generating and modifying engineering schematics.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:

FIG 1 is a flowchart of a method for generating and modifying engineering schematics, in accordance with one or more embodiments of the present invention;

FIG 2 is a block diagram representation of a system for generating and modifying engineering schematics, in accordance with one or more embodiments of the present invention; and

FIG 3 is a flow diagram depicting a process using a knowledge graph for generating and modifying engineering schematics from a natural language input, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for generating and modifying engineering schematics are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

For purposes of the present invention, the term "engineering schematics" refers to representations used to document and communicate the design, structure, and operation of complex systems in various industries. The engineering schematics can include, but are not limited to, piping and instrumentation diagrams (P&IDs), process flow diagrams (PFDs), electrical schematics, and mechanical drawings. Engineering schematics typically consist of graphical symbols representing components and equipment, lines or arrows representing connections or flows, and textual annotations providing additional information. The process of generating and modifying engineering schematics refers to creating and updating these detailed technical diagrams. This involves adding, removing, or altering components and connections within the schematic, ensuring that the diagram accurately reflects the intended design and functionality of the engineering system.

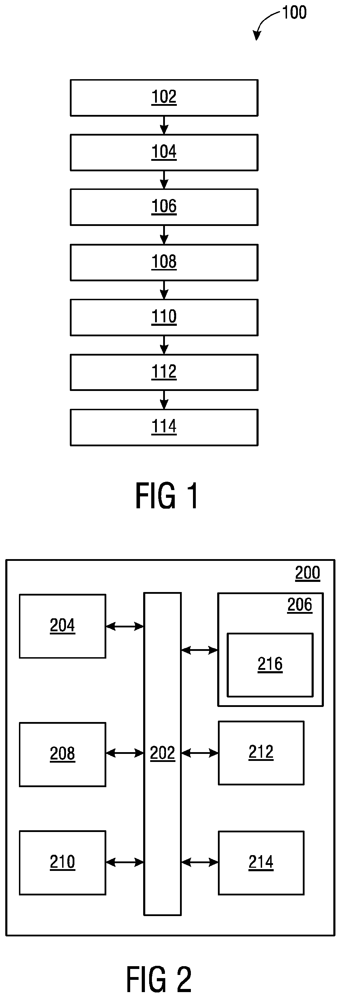

Referring to FIG 1, illustrated is a flowchart of a method (as represented by reference numeral 100) for generating and modifying engineering schematics, in accordance with an embodiment of the present invention. The method 100 is implemented to enable users to interact with the system using natural language inputs, which are then interpreted and translated into actionable modifications to the engineering schematic. The method 100 combines the interpretative capabilities of large language models (LLMs), the representation power of knowledge graphs (KGs), and a human-cantered interaction approach to enable creation, modification, and validation of engineering schematics. The method 100 significantly reduces the manual effort involved in schematic design, enhances the accuracy of designs, and facilitates seamless updates and modifications.

Referring to FIG 2, illustrated is a block diagram of a system 200 for generating and modifying engineering schematics, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for generating and modifying engineering schematics. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for generating and modifying engineering schematics. In particular, the memory unit 206 includes an engineering schematic design module 216 to perform steps for the said purpose.

Referring to FIGS 1-2 in combination, various steps of the method 100 (as described hereinafter), which may be executed in the system 200, or specifically in the processing unit 204 of the system 200, for generating and modifying engineering schematics, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes receiving, via a user interface, a natural language input related to an engineering schematic. For this purpose, the user interface (such as, the interface 208) is configured to accept textual inputs from a user, allowing the user to describe desired modifications or additions to an engineering schematic using everyday language. The natural language input is related to an engineering schematic, which may be a Piping and Instrumentation Diagram (P&ID), Process Flow Diagram (PFD), Heating, Ventilation and Air Conditioning (HVAC) layout, or an electrical wiring diagram. The natural language input comprises a user intent to perform one or more operations on the engineering schematic. These operations may include adding new components, modifying existing components, removing components, or establishing connections between components.

The natural language input serves as the primary mode of interaction between the user and the system 200, bridging the gap between human expression of design intent and the technical requirements of schematic creation. This approach significantly reduces the learning curve associated with traditional computer-aided design software, as users can express their design intentions in familiar language rather than having to learn complex software interfaces or command structures. For example, a user may input a statement such as *"Move the crude oil from Tank A to Tank B, Tank A is at 20m height and Tank B is at 40m height. "*This natural language input contains the user intent to create a flow path between two tanks and specifies attributes of the tanks, namely their heights. Such input is interpreted to extract the relevant information needed to modify the engineering schematic accordingly. In the given example, it is more of an interpretation of the user's intent and break it down into components as follows: *Action: Move; Source: Tank A; Destination:*

*Tank B; Numerical Attributes: (Height_Source: 20m, Height_Destination: 40m); Object: Fluid (Crude Oil).* This structure is only a representative example. The actual structuring may vary, and the entire process of supplying the correct inputs (utterance, current state, context, domain, organization), as discussed later in more detail.

The method 100 is capable of interpreting both explicit and implicit intent from the natural language input. Explicit intent is directly stated in the input, such as the request to move crude oil between tanks in the earlier example. Implicit intent is derived based on context from previous user interactions, domain-specific rules, and industry best practices. For instance, if the user has previously specified that all fluid transfers should use centrifugal pumps, it may be implicitly understood that a pump needs to be added between the tanks, even if not explicitly stated in the current input.

As used herein, the user interface may be part of the input device 212 of the system 200, for receiving the natural language input. In present implementations, the user interface is designed to be user-friendly and intuitive, allowing engineers to express their design requirements in a manner that feels natural to them. This approach eliminates the need for users to learn complex query languages or navigate through multiple menus and options to find the information they need. In some examples, the user interface may also provide features to assist users in formulating their queries. This could include autocomplete suggestions based on commonly used terms in engineering schematics, or a list of example queries to help users understand the types of questions the system can handle. Such features can help users, especially those new to the system, to make the most effective use of the natural language input capability.

The natural language input (query) serves as the starting point for the process of generating recommendations. By allowing users to express their needs in natural language, the method 100 can capture specific element requests as well as contextual information about the project, such as the type of facility being designed or specific operational requirements. This contextual information allows for generating accurate and relevant recommendations in subsequent steps of the process.

At step 104, the method 100 includes generating a structured representation of the natural language input by processing the natural language input using a language model. This is done for translating the natural language input into a format that can be effectively used to search a knowledge graph (as discussed later) and generate relevant recommendations. This structured representation is formatted in a way that can be directly used to search the knowledge graph. In the case where SPARQL is used, the generated structured representation may include specific graph patterns to match against the nodes and edges in the knowledge graph. The conversion from the natural language input to the structured representation is a process that involves mapping natural language concepts to the specific structure and terminology used in the knowledge graph. This may involve expanding acronyms, resolving ambiguities, and inferring additional relevant search terms based on the context of the query.

Herein, the structured representation comprises one or more of identified engineering components, actions to be performed on the identified engineering components, and attributes associated with the identified engineering components. The identified engineering components in the structured representation refer to specific elements of the engineering schematic that are mentioned or implied in the natural language input. These components may include, but are not limited to, tanks, pumps, valves, pipes, heat exchangers, and sensors. The actions to be performed on the identified engineering components are also captured in the structured representation. These actions correspond to the operations that the user intends to carry out on the engineering schematic. The actions may include adding new components, removing existing components, modifying component properties, and establishing connections between components. The attributes associated with the identified engineering components provide specific details about the components or the actions to be performed. The attributes may include physical properties such as dimensions, capacities, or materials; operational parameters like flow rates, temperatures, or pressures; or positional information such as coordinates or relative locations within the schematic.

The generated structured representation serves as an intermediate step between natural language input and the technical operations. Specifically, the structured representation acts as a bridge, translating human intent into a format that can be used to query the knowledge graph and ultimately generate or modify the engineering schematic. This structured format ensures that all relevant information from the user's natural language input is captured and organized in a way that facilitates further processing.

In an embodiment, the language model is a large language model (LLM) trained on domain-specific engineering terminology and syntax. This specialized training enables the model to accurately interpret and understand the nuances of engineering language used in the context of creating and modifying schematics.

The LLM is exposed to vast amounts of engineering documentation, technical specifications, industry standards, and examples of engineering schematics during its training phase. This exposure allows the LLM to develop an understanding of the vocabulary, phraseology, and conceptual relationships common in engineering domains. The domain-specific training also enables the LLM to understand the syntax typically used in describing engineering systems, including how components are typically described in relation to each other, how specifications are typically stated, and how modifications to systems are commonly expressed. This specialized knowledge allows the LLM to more accurately parse and interpret natural language inputs related to engineering schematics, extracting relevant information and intentions even when the input uses highly technical or domain-specific language.

In case of the LLM, deriving the structured outputs (as discussed above) is performed by the engineering of prompts to an LLM. The training or fine tuning of such an LLM is beyond the scope of the present invention, and thus not discussed herein. The next step is to translate this set of requirements into the components of the domain and their attributes, once again by using specific prompts to an LLM (which may be the same or a different one than the one mentioned above). The expected output is:

What are the components?: Tank A, Tank B, Pump, Non-Return Valve What are their attributes?: Power = (mass of fluid) * (gravity of Earth) * (Abs ( Height_Dest - Heigh t_Source) ) How are they connected?: Tank A -> Non-Return Valve -> Pump -> Tank B

Though a simplistic example has been stated above for purposes of explanation, the intent is actually a complex set, that could consist of what the user has explicitly stated and then, to add a layer of interpretation, there could also be implicit intent, such as context based on history of interactions by the user (e.g., domain specific language such as "star pump"), domain specific rules (such as not allowing two fluids of different pH to mix, or using food-grade material for piping) and best practices.

In another embodiment, the conversion from natural language utterances to structured form can be handled by controlled natural language (CNL), natural language translation, first order logic, and the like. The CNL model, for instance, uses a restricted version of natural language designed for the specific purpose of describing engineering schematics. The CNL approach offers increased accuracy in intent understanding, at the cost of some flexibility in input phrasing. In case of CNL, the human intent is described through the Controlled Natural Language rather than an entirely free-form Natural Language text. This is a restricted version of a natural language that is designed to meet a specific purpose within a specific domain. A CNL uses a well-defined subset of a language's syntax, grammar and semantics, but adds the terminology needed for the technical domain. So, the vocabulary is familiar to the technical domain expert/user.

Taking the P&ID use case, the CNL data model may comprise of concepts such as Action, Source, Destination, Subject, Object, and Quantities. Herein, a user query *"Move the crude oil from Tank A to Tank B, Tank A is at 20m height and Tank B is at 40m height."* can then be interpreted to the expected form based on the CNL mapping.

It may be appreciated that as compared to the LLM case with free text, using the CNL has reduced flexibility but this approach offers certain benefits, such as:

a)Familiarity of the user with the domain vocabulary; b)Increased accuracy of the intent understanding; c)Less prone to errors and more robustness; d)Serves as a form of guidance for the user, in which the UI may even be enhanced to be more intuitive (e.g., allow the user to specify the required concepts, offer options for selection) rather than requiring the user to start with an empty text field;

e)Improved efficiency and accuracy of being processed by a machine; f)Inputs and intermediate outputs are well-structured with less need for pre/post processing; and g) Better adherence to industry standards by engineering the CNL data model to be aligned with the standard.

In present embodiments, the processing of the natural language input using the language model involves interpreting explicit intent and deriving implicit intent. Specifically, the method 100 includes interpreting explicit intent stated in the natural language input. When interpreting explicit intent stated in the natural language input, the language model identifies and extracts clearly stated instructions, specifications, or requests. This includes recognizing explicitly mentioned components, actions, and attributes. For example, if the input states "Add a pump with a flow rate of 100 litters per minute," the model interprets this as an explicit intent to add a pump component with a specific flow rate attribute. Further, the method 100 includes deriving implicit intent based on at least one of context from previous user interactions, domain-specific rules, and industry best practices. This involves inferring additional information or requirements that are not explicitly stated in the current input. The model may consider the history of previous interactions with the user to understand preferences or recurring patterns in their design approach. The model may also apply domain-specific rules, such as automatically including necessary safety valves when certain conditions are met, even if not explicitly requested. Furthermore, the model incorporates industry best practices, potentially suggesting modifications or additions that align with standard engineering principles. For example, if a user requests a connection between two tanks at different heights, the model may implicitly understand the need for a pump, even if not explicitly mentioned, based on the principle that fluid need a pump to be transported to a height. This combination of explicit and implicit intent interpretation allows to generate accurate structured representations, capturing both the user's stated requirements and unstated but necessary considerations defined by engineering principles and best practices.

At step 106, the method 100 includes generating one or more knowledge graph queries, for a knowledge graph, based on the structured representation. These knowledge graph queries are designed to interact with a knowledge graph that represents the domain knowledge relevant to the engineering schematic. The process of generating these queries involves translating the information contained in the structured representation into a format that can be used to query the knowledge graph effectively. The knowledge graph queries are generated based on the structured representation, which includes the identified engineering components, actions to be performed, and associated attributes. Each element of the structured representation may correspond to one or more queries, depending on the complexity of the user's intent and the information required from the knowledge graph.

The knowledge graph queries are compatible with the knowledge graph based on a standardized ontology for a domain of the engineering schematic. This standardized ontology ensures consistency in terminology and relationships across different types of engineering schematics. For example, in the case of Piping and Instrumentation Diagrams (P&IDs), the method 100 may use the DEXPI (Data Exchange in the Process Industry) ontology or a customized version thereof. The use of a standardized ontology allows to generate queries that accurately map to the structure and content of the knowledge graph. In present implementations, the generated queries are typically in a format such as SPARQL (SPARQL Protocol and RDF Query Language), which is designed for querying graph databases. These queries are structured to navigate the relationships between nodes in the knowledge graph, retrieve relevant data, and potentially modify the graph structure if required by the user's intent.

In present embodiments, the process of generating one or more knowledge graph queries involves a series of steps designed to translate the structured representation of the user's intent into specific queries that can interact with the knowledge graph. First, the method 100 involves analysing the structured representation to identify constituent components. This include examining each element including identified engineering components, actions to be performed, and associated attributes. This analysis determines which specific pieces of information need to be retrieved from or manipulated in the knowledge graph. Then, the method 100 involves preparing prompts based on a catalogue of examples for different types of intents. This catalogue serves as a repository of pre-defined query templates corresponding to various common operations and inquiries in the domain of engineering schematics. For present purposes, the appropriate templates are selected based on the identified constituent components and the overall intent derived from the structured representation. Finally, the method 100 involves generating the one or more knowledge graph queries using the prepared prompts. This combines the selected query templates with the specific information from the structured representation to create fully formed queries, typically in a language like SPARQL. The method 100 may involve filling in placeholders in the query templates with specific component names, attributes, and other relevant details from the structured representation. This process allows to convert the user's natural language input into precise, structured queries that can effectively interact with the knowledge graph while ensuring consistency with its standardized ontology.

In general, the prompts may be prepared by, for example, one-shot learning based on a catalogue of examples for different types of intents, such as "Create", "modify", and "delete". Once the prompts themselves are constructed, these are supplied to create the SPARQL queries that finally interact with the knowledge graph. An example query to add the two tanks to the knowledge graph would be as follows.

```
PREFIX dexpi: < http://data.posccaesar.org/rdl>
PREFIX rdf: <http://www.w3.org/1999/02/22-rdf-syntax-ns#>
CONSTRUCT {
?comp 1 rdf:type dexpi:CheckValve .
?comp2 rdf:type dexpi:vessel .
?comp2 rdf:name "Tank A" .
?comp3 rdf:type dexpi:vessel .
?comp2 rdf:name "Tank B"
```

It may be understood that such knowledge graph queries serve to create, extend, or otherwise modify the underlying knowledge graph corresponding to the system representation.

The method 100 by generating the knowledge graph queries that are compatible with the standardized ontology, ensures that the information needed to fulfil the user's intent can be accurately retrieved and manipulated, while maintaining consistency with industry standards and best practices represented in the knowledge graph. For example, if the structured representation indicates the need to add a pump with specific flow rate requirements, the method 100 may generate queries to retrieve information about compatible pump types, their specifications, and their connectivity requirements with other components in the engineering system. The queries may look for pumps that meet the specified flow rate, are suitable for the type of fluid being moved, and are compatible with the existing components in the engineering schematic. This approach allows to leverage the comprehensive domain knowledge encoded in the knowledge graph to generate accurate and standards-compliant engineering schematics.

At step 108, the method 100 includes executing the one or more knowledge graph queries to retrieve, from the knowledge graph, one or more of component data corresponding to the identified engineering components, connection data specifying allowable connections between the identified engineering components, and attribute data specifying allowable attributes for the identified engineering components and the allowable connections. his retrieval process involves accessing the knowledge graph, which is structured based on a standardized ontology for the domain of the engineering schematic. Herein, the component data includes detailed information about each component type, such as its standard representations, typical use cases, and general specifications. For example, if a pump is identified in the user's input, the system retrieves data about various types of pumps, their standard symbols in schematics, and their general characteristics. The connection data specifying allowable connections between the identified engineering components defines how different components can be connected in the engineering schematic, ensuring that the system only proposes or allows connections that are physically and logically valid within the domain of the engineering schematic. For instance, the connection data may specify that a valve can be connected to a pipe, but not directly to a tank without an intervening pipe. The attribute data specifying allowable attributes for the identified engineering components and the allowable connections defines the range of valid properties and parameters for each component and connection type. For a pump, this may include allowable flow rates, pressure ratings, or materials of construction. For a connection between components, this may specify allowable diameters, materials, or operating conditions. The methos 100, by retrieving this comprehensive set of data, ensures that all subsequent steps in generating or modifying the engineering schematic are based on accurate, standardized information that complies with industry norms and best practices.

At step 110, the method 100 includes generating a system representation, corresponding to the engineering schematic, using the knowledge graph based on the retrieved component data, connection data, and attribute data, and the specified actions in the structured representation. This generation process involves creating an internal model of the engineering schematic that incorporates all the relevant information obtained from the knowledge graph and the user's input. The process begins by mapping the identified engineering components from the structured representation to their corresponding representations in the retrieved component data. Each component is instantiated in the system representation with its associated attributes and properties as specified in the attribute data. The process then establishes connections between these components based on the connection data and the actions specified in the structured representation. These connections are created in accordance with the allowable connections defined in the connection data, ensuring that only valid and logical connections are made. Then, the specified actions from the structured representation are applied, such as adding, modifying, or removing components, to this developing system representation. Throughout this process, the knowledge graph is continuously referenced to validate that all components, connections, and attributes in the system representation adhere to the standardized ontology and domain-specific rules. If the specified actions in the structured representation involve modifying an existing engineering schematic, the process involves first loading the existing engineering schematic into the system representation and then applies the necessary modifications. The resulting system representation serves as a complete and accurate model of the engineering schematic, incorporating all the user-specified changes while maintaining compliance with industry standards and best practices as encoded in the knowledge graph.

The knowledge graph, as used herein, representing engineering components and edges representing connections between the engineering components. This structure allows for a flexible and comprehensive representation of engineering systems, where each node defines the properties and attributes of a specific component, and each edge defines the nature of the relationship or connection between components. When generating the system representation using the knowledge graph, the system performs operations that directly manipulate this graph structure. These operations include at least one of adding nodes and edges, modifying existing nodes or edges, and removing nodes or edges within the knowledge graph. The process of adding nodes involves creating new instances of engineering components in the system representation, each represented by a node with associated attributes as specified in the retrieved component data. Adding edges entails establishing new connections between existing or newly created nodes, adhering to the allowable connections defined in the connection data. Modifying existing nodes or edges is performed when the user's input requires changes to the properties or relationships of components already present in the system representation. This may involve updating attribute values of nodes or altering the properties of edges to reflect changes in connections. Removing nodes or edges is executed when the user's input specifies the deletion of components or the disconnection of previously connected components. Such modification of the knowledge graph structure allows the system to accurately reflect the user's intended changes to the engineering schematic while maintaining the integrity and validity of the system representation.

Specifically, in the method 100, the process of generating the system representation using the knowledge graph involves multiple steps to ensure the use of standardized components. First, the method 100 involves comparing specifications in the structured representation with a database of standardized components. This database (such as, the database 210) contains information about industry-standard components, their properties, and their typical uses. The comparison process involves matching parameters such as component type, size, capacity, material, and other relevant attributes. Next, the method 100 involves identifying standardized components that correspond to the specifications based on the comparison. When an exact match is found in the database, that standardized component is selected for use in the system representation. In cases where an exact match is not available, the method 100 identifies the closest matching standardized component or a combination of components that fulfil the specified requirements. Finally, the method 100 involves generating the system representation using the identified standardized components. Each identified standardized component is instantiated as a node in the knowledge graph, complete with all its standard properties and attributes. The method 100 then establishes the necessary connections between these components, represented as edges in the graph, based on the structured representation and the allowable connections defined in the knowledge graph. This way the method 100 ensures that the generated system representation adheres to industry norms and standards, facilitating compatibility, maintenance, and compliance with regulatory requirements in the resulting engineering schematic.

At step 112, the method 100 includes rendering a visual representation of the engineering schematic based on the generated system representation. This rendering process translates the system representation, which exists as a structured set of nodes and edges in the knowledge graph, into a visual format that can be easily understood and manipulated by users. The rendering process begins by retrieving visual symbols or icons associated with each engineering component in the system representation. These symbols are typically standardized within the specific engineering domain and are stored as part of the component data in the knowledge graph. The method 100, then, involves determining a spatial arrangement of the engineering components using a layout algorithm. Herein, the layout algorithm may implement a suitable networking layout such as the orthogonal layout, which seems to be the closest to the domain. The spatial arrangement of the engineering components is determined on a two-dimensional canvas. This arrangement is guided by the connections between components as defined in the system representation, as well as by standard layout practices for the type of engineering schematic being created. The method 100, finally, involves rendering the engineering components and their connections based on the determined spatial arrangement. This step includes drawing the connections between components, represented as lines or arrows depending on the nature of the connection and the standards of the specific engineering domain. Labels, annotations, and other textual information from the system representation are added to the visual representation, providing necessary details about components, connections, and system parameters. The rendered visual representation serves as a graphical interface through which users can view, understand, and interact with the engineering schematic.

At step 114, the method 100 includes outputting the visual representation of the engineering schematic via the user interface. This output step involves displaying the rendered visual representation on an output device (such as, the output device 214), for example a screen or other display device accessible to the user. The user interface presents the engineering schematic in a format that allows for clear visualization of all components, connections, and relevant details. In addition to the visual representation, the method 100 may output supplementary information via the user interface, such as a legend explaining symbol meanings, a list of components and their properties, or summary statistics about the engineering schematic. The visual representation is not a mere image but rather a vector graphic representation strongly linked by the drawing canvas to the underlying knowledge graph so that selection, editing and deletion of the individual parts of the rendered engineering schematic are all possible. In general, the outputted visual representation serves as a final product of the schematic generation or modification process and a starting point for further user interaction, allowing users to visually verify the results of their natural language inputs and potentially make further modifications or refinements to the engineering schematic.

In some embodiments, the method 100 further includes additional steps to facilitate iterative modifications of the engineering schematic. This involves receiving, via the user interface, a user input to modify the visual representation of the engineering schematic. This user input may take various forms, such as drag-and-drop actions to reposition components, mouse clicks to select and modify components or connections, or text inputs to change component properties or add annotations. Upon receiving such user input, the method 100 proceeds to updating the system representation based on the user input. This updating process involves translating the user's modifications back into the structured format of the system representation. For example, if a user moves a component in the visual representation, the method 100 updates the corresponding node's position attributes in the system representation. After updating the system representation, the method 100 includes re-rendering the visual representation of the engineering schematic based on the updated system representation. This re-rendering process follows the same principles as the initial rendering, translating the modified system representation into an updated visual format. This iterative process enables users to further refine the outputted engineering schematic as required.

In some embodiments, the method 100 further includes validating the outputted engineering schematic. The validation process may involve accessing the historical data stored within the knowledge graph. This historical data may include information from past engineering schematic designs, including both successful implementations and designs that may have encountered issues. The data includes details about which combinations of elements and connections have been used in various contexts, their performance metrics, any problems encountered, and modifications made over time. The validation process may flag potential issues or inconsistencies for further review. For example, if a connection in the outputted engineering schematic has been associated with performance issues in past designs, such connection may be highlighted for the user's attention. The results of this validation process are used to refine the engineering schematic.

In an implementation, the method 100 further comprises implementing application programming interfaces (APIs) to integrate with engineering design tools. The APIs serve as a bridge between the system and various engineering design tools commonly used in the industry. These design tools may include computer-aided design (CAD) software, specialized piping and instrumentation diagram (P&ID) tools, or other engineering-specific applications (including, but not limited to, COMOS and CAD-CAM). Such API implementation provides the ability to export the generated/modified engineering schematic back into the user's existing design environment. This integration capability enhances the utility of the system 200, allowing engineers to leverage its advanced features within their familiar design environments, thereby improving efficiency and consistency in the engineering design process.

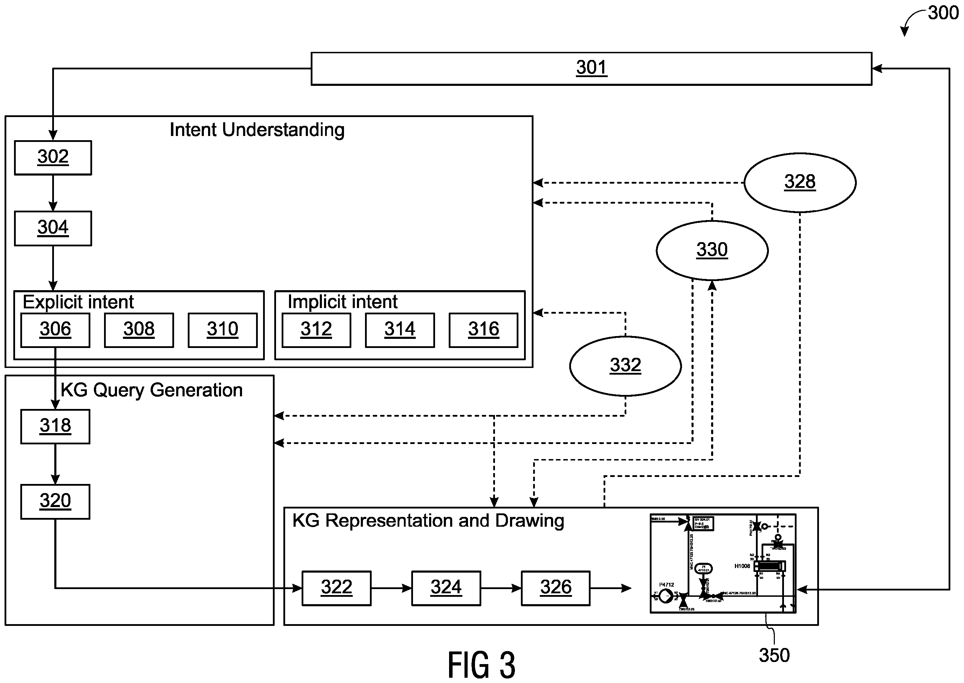

Referring to FIG 3, illustrated is a schematic diagram of an architecture for generating and modifying engineering schematics using natural language processing and knowledge graph technologies. The process 300 includes multiple interconnected steps. The process 300 implements a user interface, as represented by reference numeral 301. The process 300 begins with user input and progresses through various stages of natural language processing, intent understanding, knowledge graph manipulation, and visual rendering.

At step 302, the process 300 receives a natural language input related to an engineering schematic. This input comprises a user intent to perform one or more operations on the engineering schematic, such as adding, extending, or modifying components or connections. At step 304, the process 300 implement Natural Language Processing (NLP) techniques to parse the intent from the natural language input. This involves analysing the linguistic structure of the input to extract meaningful information. The process 300, then, involves analysing the parsed intent to determine both explicit and implicit intents. Specifically, step 306 involves identifying instructions or requests for additions to the engineering schematic as provided in the natural language input (such as, add this component or group of components). Step 308 involves identifying instructions or requests for modifications to the engineering schematic as provided in the natural language input (such as, correct this component or group of components). Step 310 involves understanding instructions to exactly identify which components or groups of components are being referred to. Simultaneously, the process 300 analyses for implicit intents. In step 312, the process 300 derives additional context from the history of user interactions and resolves any anaphoric references (pronouns or other words that refer back to previously mentioned entities) in the natural language input. Step 314 involves applying domain-specific rules to the interpreted intent, ensuring that the proposed changes align with established engineering principles and constraints. Step 316 incorporates best practices from industry experience, for modifications or additions that align with standard engineering principles, even if not explicitly requested by the user.

The process 300 further involves knowledge graph (KG) query generation. Specifically, step 318 involves constructing prompts based on the analysed explicit and implicit intents. These prompts serve as intermediary structures that bridge the gap between the natural language input and the formal queries required to interact with the knowledge graph. In step 320, the process 300 uses these constructed prompts to generate specific knowledge graph queries, by applying one or more of select, update or filter techniques. These queries are formulated in a language compatible with the knowledge graph, such as SPARQL (SPARQL Protocol and RDF Query Language).

The process 300 further involves generating KG representation. Step 322 focuses on creating or modifying the knowledge graph representation of the engineering system represented by the engineering schematic. This step involves adding, updating, or removing nodes and edges within the knowledge graph to reflect the changes specified in the user's input and interpreted by the previous steps. In step 324, the process 300 executes SPARQL queries for visualizing the engineering schematic. These queries retrieve the necessary information from the updated knowledge graph to create a visual representation of the schematic. Step 326 involves rendering the drawing on a canvas. This involves translating the abstract representation from the knowledge graph into a visual format, placing components and connections in appropriate positions, and applying any necessary visual styles or annotations. The resulting visual representation of the engineering schematic (as represented by reference numeral 350) is then displayed to the user through the user interface 301. This visual representation of the engineering schematic 350 incorporates all the instructions/modifications specified in the original natural language input.

The process 300 incorporates several components that interact with various steps. Component 328 represents the history of interactions, which maintains a record of previous user inputs and system responses. This history provides valuable context for interpreting new instructions and deriving implicit intents in steps 312-316. Component 330 is the knowledge graph representation of the system at the current time. This represents the current state of the engineering schematic as a knowledge graph, reflecting all previous modifications. This knowledge graph representation is continually updated throughout the process, particularly in step 322. Component 332 represents the domain knowledge graphs, which are collections of standardized knowledge graphs containing comprehensive information about engineering components, connections, and best practices for the specific domain. These graphs are consulted throughout the process 300, particularly in steps 314-316 for applying domain rules and best practices, and in steps 322-324 for creating and querying the system representation.

The method 100 of the present invention significantly reduces the manual effort and domain expertise required to create and modify complex engineering schematics. By allowing users to interact using natural language inputs, the method 100 bridges the gap between human expression of design intent and the technical requirements of schematic creation. The use of a knowledge graph based on a standardized ontology ensures that all modifications adhere to industry standards and best practices, even when these are not explicitly specified in the user's input.

Traditional approaches to engineering schematic creation and modification are manually repetitive and require significant levels of expertise in both the engineering domain and in specialized drafting tools. These conventional methods often necessitate a comprehensive understanding of the entire system before any modifications can be made, making the process of changing existing schematics challenging and time-consuming. In contrast, the present method 100 allows users to specify changes using natural language, eliminating the need for extensive training in specialized software. The ability to interpret both explicit and implicit intents enables the method 100 to make appropriate modifications while considering domain-specific rules and best practices, reducing the risk of errors and inconsistencies.

Furthermore, the use of a knowledge graph to represent the engineering schematic allows for more efficient and accurate modifications. Unlike traditional systems where each change may require manual adjustments to multiple interconnected components, the present method 100 can automatically make changes throughout the system representation, ensuring consistency and reducing the likelihood of oversight. The ability to generate knowledge graph queries based on natural language inputs also enables more flexible and powerful interactions with the underlying schematic data, allowing for complex modifications that would be difficult or time-consuming to achieve with conventional tools.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

<div align="center">Reference Numerals</div>

| | |
|---|---|
| method | 100 |
| step | 102 |
| step | 104 |
| step | 106 |
| step | 108 |
| step | 110 |
| step | 112 |
| step | 114 |
| system | 200 |
| bus | 202 |
| processing unit | 204 |
| memory unit | 206 |
| interface | 208 |
| database | 210 |
| input device | 212 |
| output device | 214 |
| engineering schematic design module | 216 |
| process | 300 |
| user interface | 301 |
| step | 302 |
| step | 304 |
| step | 306 |
| step | 308 |
| step | 310 |
| step | 312 |
| step | 314 |
| step | 316 |
| step | 318 |
| step | 320 |
| step | 322 |
| step | 324 |
| step | 326 |
| component | 328 |
| component | 330 |
| component | 332 |

(continued)

| engineering schematic | 350 |
| --- | --- |

**Claims**

1. A computer-implemented method (100) for generating and modifying engineering schematics, the method (100) comprising implementing a processing unit for:

   receiving, via a user interface, a natural language input related to an engineering schematic, wherein the natural language input comprises a user intent to perform one or more operations on the engineering schematic;
   generating a structured representation of the natural language input by processing the natural language input using a language model, wherein the structured representation comprises one or more of identified engineering components, actions to be performed on the identified engineering components, and attributes associated with the identified engineering components;
   generating one or more knowledge graph queries, for a knowledge graph, based on the structured representation, wherein the knowledge graph queries are compatible with the knowledge graph based on a standardized ontology for a domain of the engineering schematic;
   executing the one or more knowledge graph queries to retrieve, from the knowledge graph, one or more of component data corresponding to the identified engineering components, connection data specifying allowable connections between the identified engineering components, and attribute data specifying allowable attributes for the identified engineering components and the allowable connections;
   generating a system representation, corresponding to the engineering schematic, using the knowledge graph based on the retrieved component data, connection data, and attribute data, and the specified actions in the structured representation;
   rendering a visual representation of the engineering schematic based on the generated system representation; and
   outputting the visual representation of the engineering schematic via the user interface.

2. The method (100) of claim 1, wherein the language model is a large language model trained on domain-specific engineering terminology and syntax.

3. The method (100) of claim 1, wherein processing the natural language input using the language model further comprises:

   interpreting explicit intent stated in the natural language input; and
   deriving implicit intent based on at least one of context from previous user interactions, domain-specific rules, and industry best practices.

4. The method (100) of claim 1, wherein generating the one or more knowledge graph queries comprises:

   analysing the structured representation to identify constituent components;
   preparing prompts based on a catalogue of examples for different types of intents; and
   generating the one or more knowledge graph queries using the prepared prompts.

5. The method (100) of claim 1, wherein the knowledge graph comprises nodes representing engineering components and edges representing connections between the engineering components, and wherein generating the system representation using the knowledge graph comprises at least one of adding nodes and edges, modifying existing nodes or edges, and removing nodes or edges, within the knowledge graph.

6. The method (100) of claim 1, wherein generating the system representation using the knowledge graph comprises:

   comparing specifications in the structured representation with a database of standardized components;
   identifying standardized components that correspond to the specifications based on the comparison; and
   generating the system representation using the identified standardized components.

7. The method (100) of claim 1, wherein rendering the visual representation of the engineering schematic comprises:

retrieving visual symbols or icons associated with each engineering component in the system representation;
determining a spatial arrangement of the engineering components using a layout algorithm; and
rendering the engineering components and their connections based on the determined spatial arrangement.

8. The method (100) of claim 1, further comprising:

receiving, via the user interface, a user input to modify the visual representation of the engineering schematic;
updating the system representation based on the user input; and
re-rendering the visual representation of the engineering schematic based on the updated system representation.

9. A system (200) comprising:

one or more processing units (204); and
a memory unit (206) communicatively coupled to the one or more processing units (204), wherein the memory unit (206) comprises an engineering schematic design module stored in the form of machine-readable instructions executable by the one or more processing units (204), wherein the engineering schematic design module is configured to perform method (100) steps for generating and modifying engineering schematics, according to any of the claims 1 to 8.

10. A computer-program product having machine-readable instructions stored therein, which when executed by one or more processing units (204), cause the one or more processing units (204) to perform a method (100) according to any of the claims 1 to 8.

100

```
┌─────────────────────┐
│        102          │
└─────────────────────┘
           │
           ▼
┌─────────────────────┐
│        104          │
└─────────────────────┘
           │
           ▼
┌─────────────────────┐
│        106          │
└─────────────────────┘
           │
           ▼
┌─────────────────────┐
│        108          │
└─────────────────────┘
           │
           ▼
┌─────────────────────┐
│        110          │
└─────────────────────┘
           │
           ▼
┌─────────────────────┐
│        112          │
└─────────────────────┘
           │
           ▼
┌─────────────────────┐
│        114          │
└─────────────────────┘
```

# FIG 1

```
┌──────────────────────────────────────┐
│                                 200   │
│  ┌────────┐      ┌──────────────────┐ │
│  │        │ ◄──► │            206   │ │
│  │  204   │      │  ┌────────────┐  │ │
│  │        │      │  │    216     │  │ │
│  └────────┘      │  └────────────┘  │ │
│             ┌──┐ └──────────────────┘ │
│  ┌────────┐ │  │      ┌────────┐      │
│  │        │◄┤  ├►     │        │      │
│  │  208   │ │202│ ◄──►│  212   │      │
│  │        │ │  │      │        │      │
│  └────────┘ │  │      └────────┘      │
│  ┌────────┐ │  │      ┌────────┐      │
│  │        │◄┤  ├►     │        │      │
│  │  210   │ │  │ ◄──► │  214   │      │
│  │        │ │  │      │        │      │
│  └────────┘ └──┘      └────────┘      │
└──────────────────────────────────────┘
```

# FIG 2

FIG 3

## EUROPEAN SEARCH REPORT

**Application Number**

EP 24 19 7605

## DOCUMENTS CONSIDERED TO BE RELEVANT

| Category | Citation of document with indication, where appropriate, of relevant passages | Relevant to claim |
|---|---|---|
| A | EP 3 928 168 B1 (SCHNEIDER ELECTRIC SYSTEMS USA INC [US]) 20 December 2023 (2023-12-20) * paragraph [0016] - paragraph [0110]; figures 2, 32, 33 * ----- | 1-10 |
| A | CN 118 520 832 A (SHANGHAI FANSEN TECH CO LTD) 20 August 2024 (2024-08-20) * paragraph [0007] - paragraph [0047] * ----- | 1-10 |
| A | EP 3 933 653 A1 (SIEMENS AG [DE]) 5 January 2022 (2022-01-05) * paragraph [0005] - paragraph [0016] * ----- | 1-10 |
| A | US 2019/057145 A1 (HUANG LIANG-SHU [TW] ET AL) 21 February 2019 (2019-02-21) * paragraph [0003] * ----- | 1-10 |

**CLASSIFICATION OF THE APPLICATION (IPC)**

INV.
G06F30/00
G06F16/901
G06F40/30
G06N5/022

**TECHNICAL FIELDS SEARCHED (IPC)**

G06F
G06N

The present search report has been drawn up for all claims

| Place of search | Date of completion of the search | Examiner |
|---|---|---|
| Munich | 18 December 2024 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7605

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2024

| Patent document cited in search report | | Publication date | Patent family member(s) | | Publication date |
|---|---|---|---|---|---|
| EP 3928168 | B1 | 20-12-2023 | AU | 2020247915 A1 | 14-10-2021 |
| | | | AU | 2020247916 A1 | 14-10-2021 |
| | | | AU | 2020248388 A1 | 14-10-2021 |
| | | | CA | 3131421 A1 | 01-10-2020 |
| | | | CA | 3133312 A1 | 01-10-2020 |
| | | | CA | 3134938 A1 | 01-10-2020 |
| | | | CN | 113614655 A | 05-11-2021 |
| | | | CN | 113614656 A | 05-11-2021 |
| | | | CN | 113614666 A | 05-11-2021 |
| | | | CN | 113853553 A | 28-12-2021 |
| | | | EP | 3924790 A1 | 22-12-2021 |
| | | | EP | 3928168 A1 | 29-12-2021 |
| | | | EP | 3935453 A1 | 12-01-2022 |
| | | | EP | 3935460 A1 | 12-01-2022 |
| | | | EP | 4300230 A2 | 03-01-2024 |
| | | | JP | 7561138 B2 | 03-10-2024 |
| | | | JP | 2022521816 A | 12-04-2022 |
| | | | JP | 2022521817 A | 12-04-2022 |
| | | | JP | 2022524642 A | 09-05-2022 |
| | | | US | 2022171891 A1 | 02-06-2022 |
| | | | US | 2022187815 A1 | 16-06-2022 |
| | | | US | 2022187818 A1 | 16-06-2022 |
| | | | US | 2022197272 A1 | 23-06-2022 |
| | | | WO | 2020198249 A1 | 01-10-2020 |
| | | | WO | 2020198250 A1 | 01-10-2020 |
| | | | WO | 2020198254 A1 | 01-10-2020 |
| | | | WO | 2020198256 A1 | 01-10-2020 |
| CN 118520832 | A | 20-08-2024 | NONE | | |
| EP 3933653 | A1 | 05-01-2022 | NONE | | |
| US 2019057145 | A1 | 21-02-2019 | NONE | | |

EPO FORM P0459

For more details about this annex : see Official Journal of the European Patent Office, No. 12/82